# EUROPEAN PATENT SPECIFICATION

(11) **EP 4 645 441 B1**
(45) Date of publication and mention of the grant of the patent: **04.11.2026**
(21) Application number: 24199232.0
(22) Date of filing: 09.09.2024
(51) Int. Cl.: H01M 4/134, H01M 4/36, H01M 4/38, H01M 4/62, H01M 10/0525

(54) **COMPOSITE SILICON-BASED NEGATIVE ELECTRODE MATERIAL AND BATTERY APPLYING THE SAME**
VERBUND-NEGATIVELEKTRODENMATERIAL AUF SILICIUMBASIS UND BATTERIE DAMIT
MATÉRIAU D'ÉLECTRODE NÉGATIVE À BASE DE SILICIUM COMPOSITE ET BATTERIE L'APPLIQUANT

(30) Priority: 29.04.2024 CN 202410532969
(43) Date of publication of application: 05.11.2025
(73) Proprietor: Eve Energy Co., Ltd., Huizhou, Guangdong 516006 (CN)
(72) Inventor: Xie, Yingpeng, Huizhou, Guangdong, 516000 (CN); Zhao, Ruirui, Huizhou, Guangdong, 516000 (CN); Ji, Yajuan, Huizhou, Guangdong, 516000 (CN); Xu, Xiaoxia, Huizhou, Guangdong, 516000 (CN)
(74) Representative: Petraz, Gilberto Luigi

(56) References cited:
- CN-A- 114 927 650
- WANG Q T ET AL: "Polythiophene-coated nano-silicon composite anodes with enhanced performance for lithium-ion batteries", JOURNAL OF SOLID STATE ELECTROCHEMISTRY, SPRINGER, BERLIN, DE, vol. 20, no. 5, 22 January 2016 (2016-01-22), pages 1331 - 1336, XP035812668, ISSN: 1432-8488, [retrieved on 20160122], DOI: 10.1007/S10008-016-3127-5

## Description

### TECHNICAL FIELD

The present disclosure relates to the technical field of negative electrode materials and, particularly, to a composite silicon-based negative electrode material and a battery applying the same.

### BACKGROUND

With the rapid development of portable electronic devices, electric vehicles, and smart grids, there is an increasing demand for high-performance electrochemical energy storage devices. Lithium-ion batteries have always occupied a prominent position in the commercial market due to their high energy density, high operating voltage, long cycle life and minimal memory effect.

In terms of power batteries, the energy density of traditional lithium-ion batteries is close to the theoretical limit, which still fails to meet the demands of existing applications. At present, silicon-based materials have become a research hotspot in negative electrode materials, and the theoretical specific capacity is up to 4200mAh/g. Due to the low lithium intercalation potential, low atomic mass, and high energy density, it is considered as an alternative to carbon-based negative electrode materials, which may effectively improve the energy density of lithium-ion batteries, and therefore has been widely concerned . Wang, Q.T., et al.: "Polythiophene-coated nano-silicon composite anodes with enhanced performance for lithium-ion batteries", Journal of Solid State Electrochemistry, vol. 20, no. 5, 22-01-2016, pages 1331-1336, describes a polythiphene-coated silicon composite anode material prepared by in situ chemical oxidation polymerization.

### SUMMARY

The severe volume effect of silicon-based materials during lithiation is the biggest limitation to the commercialization of silicon-based materials. Silicon-based materials suffer from a volume expansion of about 300% during delithiation and lithiation, and the huge volume change causes a series of problems:
(1) Volume effect leads to high stress inside the cell, which easily squeezes the electrode plate and causes cracks in the silicon-based material until pulverization.
(2) The volume expansion effect makes it easy for the electrode material to lose contact with the current collector, rendering the active material detached from the electrode plate and causing rapid loss of the battery capacity.
(3) The volume expansion effect tends to form an unstable solid electrolyte interface film called SEI film. Due to the volume change of the silicon-based material, the SEI film is subsequently ruptured, and the newly exposed silicon on the surface produces a new SEI film, which also continuously consumes lithium ions in the electrolyte, leading to an irreversible loss of capacity and a low initial charging efficiency. The thickness of the SEI film increases with electrochemical cycling, and an excessively thick SEI layer hinders electron transfer and lithium ion diffusion, leading to increased impedance.

As a first aspect, provided in the present disclosure is a composite silicon-based negative electrode material, including a silicon-based material and a coating layer coated on surface of the silicon-based material, in which the coating layer includes a copolymer comprising phosphonic acid groups and cyano groups, and a molecular weight of the copolymer is 5,000 to 100,000 daltons.

As a second aspect, provided in the present disclosure is a battery, including a positive electrode plate, a negative electrode plate, electrolyte, and a separator, in which the negative electrode plate includes the composite silicon-based negative electrode material mentioned above.

By coating a coating layer containing both phosphonic acid groups and cyano groups on the surface of a silicon-based material, it is possible in the present disclosure to effectively inhibit the volume expansion of the silicon-based material during battery cycling, thereby reducing cracking and pulverization of the silicon-based material, which reduces direct contact between the silicon-based material and the electrolyte, reduces the likelihood of electrical insulation of the silicon-based material, and improves the cycling performance of batteries applying the composite silicon-based negative electrode material. A copolymer having a molecular weight of 5,000 to 100,000 daltons and containing both phosphonic acid groups and cyano groups is used to prepare the coating layer, allowing the copolymer to firmly and stably coat the surface of the silicon-based material and suppresses the volume deformation of the silicon-based material. When a copolymer with a molecular weight in the above range is selected, it enables the coating layer to have better structural stability, reduces the probability of cracking of the coating layer during battery cycling, and better suppresses the volume expansion of the silicon-based material. Due to the introduction of cyano groups with strong electron withdrawing ability into the copolymer, the front orbital energy levels of the copolymer molecules are effectively lowered, so that the copolymer has a lower lowest unoccupied molecular orbital (LUMO), which allows the composite silicon-based negative electrode material to have a high electrochemical stability and a wider electrochemical window. The phosphonic acid groups in the copolymer form hydrogen bonds with the hydroxyl groups on the surface of the silicon-based material to enhance the adhesion between the coating layer and the silicon-based material, which then enhances the structural stability of the composite silicon-based negative electrode material and further inhibits the volume expansion of the silicon-based material. Additionally, the introduction of phosphonic acid groups and cyano groups into the composite silicon-based negative electrode material enhances the battery's flame retardant properties. If the battery undergoes thermal runaway, the copolymer containing phosphonic acid groups and cyano groups forms a stable covering layer, which blocks the fire and slows down the rate of flame spreading, thus playing a flame-retardant effect, and the copolymer releases non-flammable gases during thermal decomposition, which reduces the concentration of flammable gases generated during thermal decomposition of combustible materials and the concentration of oxygen in the air, thereby playing a better flame-retardant effect. Specifically, the copolymer decomposes into a foamy substance that effectively insulates heat transfer, further improving the safety properties of the battery.

### DETAILED DESCRIPTION

In some implementations, a mole ratio of the phosphonic acid groups and the cyano groups in the copolymer is 1: (4-28).

In some implementations, the copolymer is formed by copolymerization of phosphonic acid group monomers and cyano group monomers, the phosphonic acid group monomer contains at least one of allylphosphonic acid, vinylphosphonic acid, and (1-phenylvinyl)phosphonic acid, and the cyano group monomer contains at least one of tetracyanoethylene, (E)-1,2-diamino-1,2-dicyanoethene, and 4,4'-dicyanostilbene.

In some implementations, the copolymer is formed by copolymerization of phosphonic acid group monomers and cyano group monomers, the phosphonic acid group monomer contains allylphosphonic acid, and the cyano group monomer contains tetracyanoethylene. The above kinds of phosphonic acid group monomer and cyano group monomer have lower spatial site resistance between them, having better reactivity, and the copolymers prepared have better flexibility and rigidity.

In some implementations, the mole ratio of phosphonic acid group monomers to the cyano group monomers is 1: (1-7). When the ratio between the two monomers falls into the above range, a predetermined ratio of phosphonic acid groups to cyano groups in the copolymer may be achieved, resulting in a composite silicon-based negative electrode material having a better structural stability and a lower volume expansion rate during the battery cycling process.

In some implementations, the mole ratio of phosphonic acid group monomers to the cyano group monomers is 1: (1-3).

In some implementations, there is 2-7wt% of the coating layer in the composite silicon-based negative electrode material. By adjusting the feeding ratio of the silicon-based material to the copolymer, the mass ratio of the coating layer in the composite silicon-based negative electrode material is therefore adjusted, and when the mass ratio of the coating layer falls into the above range, the structural weak point of the coating layer is reduced and the volume expansion of the silicon-based material is suppressed under the premise of ensuring that the ion transmission distance is short and the ion transmission kinetics is good.

In some implementations, the preparation of the composite silicon-based negative electrode material includes the following steps: mixing the phosphonic acid group monomers, the cyano group monomers, a solvent, and an initiator in a certain amount, allowing an obtained mixture to react at a temperature of 50-120°C to prepare the copolymer; applying the copolymer solution to the surface of the silicon-based material, and drying the copolymer solution on the surface of the silicon-based material to form the coating layer on the surface of the silicon-based material. The preparation method is simple, effectively improves the preparation efficiency of composite silicon-based negative electrode materials, and is easy for large-scale industrialized preparation and production.

In some implementations, the mixture is reacted at a temperature of 50-120°C for 10-20 hours.

In some implementations, the copolymer solution and the silicon-based material are mixed at 40-80°C for 5-10 hours.

In some implementations, forming the coating layer includes following specific steps: mixing the silicon-based material and the copolymer solution, and spray drying a mixing slurry obtained therefrom.

In some implementations, the inlet temperature is 100-200°C and the outlet temperature is 60-90°C in the process of spray drying.

In some implementations, the solvent contains at least one of N-methyl-2-pyrrolidinone, and benzene.

In some implementations, the initiator is an azo initiator. In some implementations, the initiator contains at least one of azodiisobutyronitrile, and azodiisohexanenitrile.

In some implementations, the initiator is added at a ratio of 0.02-1 wt% in the mixture, in terms of a total mass of phosphonic acid group monomer, cyano group monomer, and solvent as 100%.

In some implementations, the reaction solution obtained after the mixture is reacted at a temperature of 50-120 °C, the reaction solution is mixed with the precipitation solvent, the solid-liquid separation is carried out, and the solid product obtained is the copolymer.

In some implementations, the precipitation solvent is at least one of propanol, isopropanol, and acetone.

In some implementations, the silicon-based material includes at least one of silicon monoxide, silicon carbon, and silicon.

In some implementations, a mass fraction of the copolymer in the copolymer solution is 5-20%. When the concentration of the copolymer solution is in the above concentration range, it enables the copolymer to more uniformly and completely wrap the silicon-based material, form a structurally stable coating layer, reduce the structural weak points of the coating layer, and enhance the inhibition effect on the volume expansion of the silicon-based material.

In some implementations, the negative electrode plate further contains graphite, and a mass ratio of the composite silicon-based negative electrode material to graphite is 1: (6-10). The graphite and the composite negative electrode material were used to collectively prepare the negative electrode plate, and when the mass ratio of the composite negative electrode material to the graphite falls into the above range, the negative electrode plate provides a high energy density and a high chemical stability.

In some implementations, the electrolyte contains carbonate ester compounds. During the first charging and discharging process of the battery, the component in the electrolyte reacts with lithium ions to form an SEI film at the negative electrode, and the SEI film serves to isolate the electrolyte and high ionic conductivity. When a battery is prepared using an electrolyte containing carbonate ester compounds paired with the composite negative electrode material mentioned above, the interaction between the cyano groups in the coating layer of the composite negative electrode material and the carbonyl groups in the carbonate ester compounds enables the stability of the SEI film to be improved, thereby enhancing the battery cycling performance.

### Example 1

Provided in the present example is a composite silicon-based negative electrode material, including silicon-based material and a coating layer coated on the surface of the silicon-based material, in which silicon monoxide was used for the silicon-based material, and the coating layer consisted of a copolymer.

The copolymer was prepared by the phosphonic acid group monomers and cyano group monomers, and the mole ratio of the phosphonic acid group monomers to the cyano group monomers is 1: 2. The phosphonic acid group monomer is allylphosphonic acid, CAS No. 6833-67-6, and the chemical structure formula is 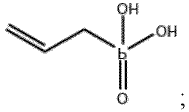 and the cyano group monomer is tetracyanoethylene, CAS No. 670-54-2, and the chemical structure formula is 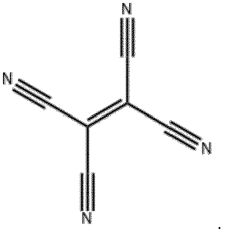 In the present example, allylphosphonic acid-tetracyanoethylene was used as the copolymer, with a molecular weight thereof being 50,000 daltons and a mole ratio of the phosphonic acid groups to the cyano groups in the copolymer being 1: 8.

Preparation steps of the composite silicon-based negative electrode material included:
The raw materials used to prepare the composite silicon-based negative electrode materials were weighed according to the mass ratio, the phosphonic acid group monomer and the cyano group monomer were mixed homogeneously with the solvent and the initiator, it was heated to 100°C under argon protection and reacted for 15 hours, and the reaction solution thereafter was mixed homogeneously with the precipitation solvent to obtain the copolymer precipitate, filtered, washed and dried to obtain the copolymer.

The copolymer and the solvent were mixed at 60°C for 7 hours and mixed homogeneously to make a copolymer solution with a mass fraction of 10 wt%, and then the copolymer solution was mixed homogeneously with the silicon-based material, and the composite silicon-based negative electrode material was prepared after spray drying.

In the present example, the solvent used is N-methyl-2-pyrrolidinone, the initiator used is azodiisobutyronitrile, and the precipitation solvent used is propanol. The initiator is added at a ratio of 0.05 wt% in the mixture, in terms of a total mass of phosphonic acid group monomer, cyano group monomer, and solvent as 100%.

### Example 2

A composite silicon-based negative electrode material is prepared in the present example with reference to the preparation method of Example 1, and the present example is different from Example 1 in that: when preparing the copolymer, the amount of cyano group monomer was adjusted so that the mole ratio of the phosphonic acid group monomer to the cyano group monomer was 1: 1, i.e., the mole ratio of the phosphonic acid groups to the the cyano groups in the copolymer is 1: 4. The remaining raw material ratios, copolymer molecular weights, and preparation methods were strictly consistent with Example 1.

### Example 3

A composite silicon-based negative electrode material is prepared in the present example with reference to the preparation method of Example 1, and the present example is different from Example 1 in that: when preparing the copolymer, the amount of cyano group monomer was adjusted so that the mole ratio of the phosphonic acid group monomer to the cyano group monomer was 1: 3, i.e., the mole ratio of the phosphonic acid groups to the the cyano groups in the copolymer is 1: 12. The remaining raw material ratios, copolymer molecular weights, and preparation methods were strictly consistent with Example 1.

### Example 4

A composite silicon-based negative electrode material is prepared in the present example with reference to the preparation method of Example 1, and the present example is different from Example 1 in that: when preparing the copolymer, the amount of cyano group monomer was adjusted so that the mole ratio of the phosphonic acid group monomer to the cyano group monomer was 1: 7, i.e., the mole ratio of the phosphonic acid groups to the the cyano groups in the copolymer is 1: 28. The remaining raw material ratios, copolymer molecular weights, and preparation methods were strictly consistent with Example 1.

### Example 5

A composite silicon-based negative electrode material is prepared in the present example with reference to the preparation method of Example 1, and the present example is different from Example 1 in that: when preparing the copolymer, the reaction time and reaction temperature were adjusted so that the molecular weight of the copolymer was 5,000 daltons. The remaining raw material ratios and preparation methods were strictly consistent with Example 1.

### Example 6

A composite silicon-based negative electrode material is prepared in the present example with reference to the preparation method of Example 1, and the present example is different from Example 1 in that: when preparing the copolymer, the reaction time and reaction temperature were adjusted so that the molecular weight of the copolymer was 100,000 daltons. The remaining raw material ratios and preparation methods were strictly consistent with Example 1.

### Example 7

A composite silicon-based negative electrode material is prepared in the present example with reference to the preparation method of Example 1, and the present example is different from Example 1 in that: when preparing the composite silicon-based negative electrode material, the solvent addition was adjusted so that the mass fraction of the copolymer solution was 3 wt%. The remaining raw material ratios, copolymer molecular weights, and preparation methods were strictly consistent with Example 1.

### Example 8

A composite silicon-based negative electrode material is prepared in the present example with reference to the preparation method of Example 1, and the present example is different from Example 1 in that: when preparing the composite silicon-based negative electrode material, the solvent addition was adjusted so that the mass fraction of the copolymer solution was 5 wt%. The remaining raw material ratios, copolymer molecular weights, and preparation methods were strictly consistent with Example 1.

### Example 9

A composite silicon-based negative electrode material is prepared in the present example with reference to the preparation method of Example 1, and the present example is different from Example 1 in that: when preparing the composite silicon-based negative electrode material, the solvent addition was adjusted so that the mass fraction of the copolymer solution was 20 wt%. The remaining raw material ratios, copolymer molecular weights, and preparation methods were strictly consistent with Example 1.

### Example 10

A composite silicon-based negative electrode material is prepared in the present example with reference to the preparation method of Example 1, and the present example is different from Example 1 in that: when preparing the composite silicon-based negative electrode material, the solvent addition was adjusted so that the mass fraction of the copolymer solution was 25 wt%. The remaining raw material ratios, copolymer molecular weights, and preparation methods were strictly consistent with Example 1.

### Example 11

A composite silicon-based negative electrode material is prepared in the present example with reference to the preparation method of Example 1, and the present example is different from Example 1 in that: when preparing the copolymer, an equimolar amount of (1-phenylvinyl)phosphonic acid was used instead of the phosphonic acid group monomer in Example 1. The remaining raw material ratios, copolymer molecular weights, and preparation methods were strictly consistent with Example 1.

### Example 12

A composite silicon-based negative electrode material is prepared in the present example with reference to the preparation method of Example 1, and the present example is different from Example 1 in that: when preparing the copolymer, 4,4'-dicyanostilbene was used instead of the cyano group monomer in Example 1, and the amount of cyano groups in the copolymer is equal to that in Example 1, i.e., the mole ratio of the phosphonic acid groups to the the cyano groups in the copolymer is 1: 8. The remaining raw material ratios, copolymer molecular weights, and preparation methods were strictly consistent with Example 1.

### Contrast Example 1

A composite silicon-based negative electrode material is prepared in the present contrast example with reference to the preparation method of Example 1, and the present contrast example is different from Example 1 in that: An equal mass of silicon-based material was used instead of the composite silicon-based negative electrode material in Example 1. This silicone-based material does not contain a coating layer. Specifically, silicon monoxide is used as the silicon-based material. The remaining raw material ratios and preparation methods were strictly consistent with Example 1.

### Contrast Example 2

A composite silicon-based negative electrode material is prepared in the present contrast example with reference to the preparation method of Example 1, and the present contrast example is different from Example 1 in that: when preparing the composite silicon-based negative electrode material, poly(allylphosphonic acid) with a molecular weight of 50,000 daltons was used instead of the copolymer in Example 1. The remaining raw material ratios and preparation methods were strictly consistent with Example 1.

### Contrast Example 3

A composite silicon-based negative electrode material is prepared in the present contrast example with reference to the preparation method of Example 1, and the present contrast example is different from Example 1 in that: when preparing the composite silicon-based negative electrode material, poly(tetracyanoethylene) with a molecular weight of 50,000 daltons was used instead of the copolymer in Example 1. The remaining raw material ratios and preparation methods were strictly consistent with Example 1.

### Contrast Example 4

A composite silicon-based negative electrode material is prepared in the present contrast example with reference to the preparation method of Example 1, and the present contrast example is different from Example 1 in that: when preparing the composite silicon-based negative electrode material, a mixture of equal mass of poly(allylphosphonic acid) and poly(tetracyanoethylene) (i.e., a physical mixture of the two homopolymers) was used instead of the copolymer in Example 1. In this mixture, both poly(allylphosphonic acid) and poly(tetracyanoethylene) have a molecular weight of 50,000 daltons, respectively. The mole ratio of poly(allylphosphonic acid) to poly(tetracyanoethylene) allows for a mole ratio of phosphonic acid groups to cyano groups in the mixture of 1: 8. The remaining raw material ratios and preparation methods were strictly consistent with Example 1.

### Contrast Example 5

A composite silicon-based negative electrode material is prepared in the present contrast example with reference to the preparation method of Example 1, and the present contrast example is different from Example 1 in that: when preparing the composite silicon-based negative electrode material, a mixture of equal mass of phosphonic acid group monomer (i.e., allylphosphonic acid) and cyano group monomer (i.e., tetracyanoethylene) (i.e., a physical mixture of the two monomers) was used instead of the copolymer in Example 1, in which the mole ratio of the phosphonic acid group monomer to the cyano group monomer in the mixture is 1: 2. The remaining raw material ratios and preparation methods were strictly consistent with Example 1.

### Contrast Example 6

A composite silicon-based negative electrode material is prepared in the present example with reference to the preparation method of Example 1, and the present example is different from Example 1 in that: when preparing the copolymer, the reaction time and reaction temperature were adjusted so that the molecular weight of the copolymer was 4,000 daltons. The remaining raw material ratios and preparation methods were strictly consistent with Example 1.

### Contrast Example 7

A composite silicon-based negative electrode material is prepared in the present example with reference to the preparation method of Example 1, and the present example is different from Example 1 in that: when preparing the copolymer, the reaction time and reaction temperature were adjusted so that the molecular weight of the copolymer was 110,000 daltons. The remaining raw material ratios and preparation methods were strictly consistent with Example 1.

### Test Example

Test object: a cell was obtained by preparing the composite silicon-based negative electrode material provided in Examples 1-12, and the Contrast Examples 1-7, and the cells were used as test objects. The cells were prepared as follows:

Negative electrode plate: The composite silicon-based negative electrode material, graphite, conductive agent SP, and binder PAA were mixed in a solvent according to a mass ratio of 10:85:2:3, the solid content of the slurry was controlled to be 45%, the slurry was coated on a copper foil current collector, and the negative electrode plate was prepared after vacuum drying.

Positive electrode plate: NCM811, SP, binder PVDF are mixed in solvent according to the mass ratio of 95:3:2, the solid content of slurry is controlled to be 65%, the slurry was coated on aluminum foil current collector, and the positive electrode plate was prepared after vacuum drying.

Electrolyte: Dried lithium hexafluorophosphonate (LiPF₆) was dissolved in a mixture of solvents (vinyl carbonate/dimethyl carbonate/methylethyl carbonate) in a volume ratio of 1:1:1, and the concentration of LiPF₆ was 1 mol/L.

Preparation of lithium-ion battery: the positive electrode plate, Celgard2400 separator, negative electrode plate are stacked in order, so that the Celgard2400 separator is between the positive and negative electrodes to play a role in isolation, and then assembled to obtain a bare cell. The bare cell is placed in the outer packaging foil, and the electrolyte prepared as described above is injected into the dried cell, which is then subjected to such as vacuum encapsulation, resting, formation, and shaping to obtain 18650 cylindrical single cell.

Test items and test methods:
(1) Expansion rate of full-charged negative electrode plate after an initial cycle:
   Cells are fully charged (charging to 4.2V at a constant current and constant voltage of 1C and a cutoff current of 0.05C). The thickness of full-charged negative electrode plate after an initial cycle is recorded as V2, the thickness of the negative electrode plate before charging is recoded as V1, and the expansion rate of full-charged negative electrode plate after an initial cycle is calculated in terms of the following formula: the expansion rate of the negative electrode = (V2-V1)/V1×100%.
(2) Capacity retention rate at 1C/1C after 400 cycles: cells were charged to 4.2V at 25°C with constant current and voltage of 1C and a cut-off current of 0.05C, set aside for 10min, discharged to 2.5V with constant current of 1C, and set aside for 10min; the above steps were cycled for 400 cycles, and the capacity retention rates of the cells at 1C/1C after 400 cycles are recorded.
(3) Rate performance: The cells after grading were charged to 4.2V at 25°C with constant current and voltage of 1C and a cut-off current of 0.05C, set aside for 10min, discharged to 2.5V with constant current of 1C, and the discharge capacity of Q_{1C} was recorded as the initial discharge capacity. The cells were then charged to 4.2V at 25°C with constant current and voltage of 1C and a cut-off current of 0.05C, set aside for 10min, discharged to 2.5V with constant current of 6C, and the discharge capacity of Q_{6C} was recorded. The discharge capacity retention rate of the cells at different rates is calculated, in which the discharge capacity retention rate of the cells at the rate of 6C (%) = Q_{6C}/Q_{1C}× 100%.
(4) Thermal runaway ARC test of cells: Test objects were heated up from room temperature to 45±2°C in the chamber, and then set aside for 90min to detect the increase rate of the cell temperature. If the temperature rise exceeds 0.2°C within 10min (i.e., SHR>0.02°C/min), it is considered that self-generated heat reaction occurs inside the cell, and the insulation environment is maintained until the cell undergoes thermal runaway; If the temperature rise does not exceed 0.2°C within 10 min (i.e., SHR ≤ 0.02°C/min), continue with the next stepped temperature rise test. Each temperature step is 5°C, and the process is repeated at each step. The ARC test temperature range is 45°C-300°C, with a self-generated heat onset temperature of T1 (temperature rise rate SHR>0.02°C/min) and a thermal runaway onset temperature of T2 (temperature rise rate SHR>1°C/min). SHR refers to self-heating rate.

Test Result is as shown in Table 1.

**Table 1 Performance results for each tested subject**

| Groups | Expansion rate of full-charged negative electrode plate after an initial cycle | Capacity retention rate at 1C/1C after 400 cycles | Capacity retention rate discharged at 1C/6C | Self-heating onset temperature T1 | Thermal runaway onset temperature T2 |
|---|---|---|---|---|---|
| Example 1 | 42.0% | 95.2% | 80.1% | 106°C | 195°C |
| Example 2 | 44.8% | 94.0% | 77.4% | 103°C | 188°C |
| Example 3 | 45.1% | 93.5% | 78.7% | 104°C | 190°C |
| Example 4 | 45.4% | 93.9% | 77.9% | 101°C | 186°C |
| Example 5 | 46.1% | 92.5% | 79.2% | 100°C | 191°C |
| Example 6 | 44.2% | 93.6% | 77.7% | 102°C | 187°C |
| Example 7 | 47.5% | 92.8% | 75.9% | 101°C | 184°C |
| Example 8 | 46.0% | 94.7% | 76.8% | 103°C | 187°C |
| Example 9 | 45.1% | 94.9% | 78.1% | 102°C | 186°C |
| Example 10 | 47.0% | 92.7% | 75.5% | 100°C | 183°C |
| Example 11 | 42.3% | 94.8% | 78.8% | 103°C | 191°C |
| Example 12 | 42.8% | 94.6% | 77.9% | 102°C | 192°C |
| Contrast Example 1 | 55% | 89.0% | 71.2% | 93°C | 172°C |
| Contrast Example 2 | 48.8% | 91.1% | 74.2% | 98°C | 176°C |
| Contrast Example 3 | 49.2% | 90.3% | 74.0% | 98°C | 179°C |
| Contrast Example 4 | 50.7% | 90.9% | 75.0% | 99°C | 177°C |
| Contrast Example 5 | 49.8% | 91.5% | 74.7% | 99°C | 181°C |
| Contrast Example 6 | 47.9% | 91.7% | 74.9% | 98°C | 182°C |
| Contrast Example 7 | 49.9% | 90.7% | 74.0% | 99°C | 178°C |

### Result Analysis:

Comparing the test performance of the lithium-ion battery provided in Examples 1-12 with that provided in Contrast Examples 1-7, it is found that compared to Contrast Examples 1-7, the composite silicon-based negative electrode material used in Examples 1-12 employs a copolymer containing phosphonic acid groups and cyano groups and having a molecular weight of 5,000 to 100,000, which effectively reduces the expansion rate of the negative electrode plate and improves the capacity retention rate of the cell.

Comparing Examples 1-12 with Contrast Example 1, it is found that the preparation of negative electrode plate using silicon-based materials containing a coating layer provides a lower expansion rate and a higher cycling capacity retention rate and heat resistance. It is thus shown that the volume expansion of the silicon-based material is effectively suppressed by the adoption of the above-described coating layer. Comparing the test performance of Example 1 with that of the Contrast Examples 2-5 in Table 1, it is found that the expansion rate of the negative electrode plate in Example 1 is lower than those of the Contrast Examples 2-4, and the capacity cycling performance is higher than those of the Contrast Examples 2-4, which suggests that both phosphonic acid groups and cyano groups need to be contained in the copolymers used to form the coating layer in order to perform a better effect of inhibiting the volume expansion of the silicon-based material. In particular, when a copolymer without phosphonic acid groups was used as the coating layer in Contrast example 3, even though hydrogen bonds were also formed between the cyano groups and the surface of the silica group, Contrast example 3 showed a higher expansion rate of the negative electrode plate than that of Example 1, thus indicating that there was a synergistic effect between the cyano groups and the phosphonic acid groups, and that the inclusion of both the cyano groups and the phosphonic acid groups in the coating layer was more effective in suppressing the volume expansion of the silicon-based material. Further, a homopolymer of cyano group monomer and a homopolymer of phosphonic acid group monomer were used to form a coating layer in Contrast Example 4, and a physical mixture of cyano group monomer and phosphonic acid group monomer was used to form a coating layer in Contrast Example 5, but Contrast Examples 4-5 showed a higher negative electrode expansion rate than that of Example 1, which suggests that the improvement of the negative electrode expansion rate is not as good as it would have been if the phosphonic acid groups and cyano groups in the coating layer were present independently.

Comparing the performance indexes of Example 1, Examples 5-6 with the Contrast Examples 6-7 in Table 1, it is found that as the molecular weight in the copolymer increases, the expansion rate of the negative electrode plate showed a tendency of decreasing firstly and then increasing. When the molecular weight of the copolymer is in a range of 5,000 to 100,000 daltons, the resulting coating layer is able to firmly and stably coat the surface of the silicon-based material, resulting in a better structural stability of the coating layer.

Comparing the performance indicators of Example 1 with those of Examples 7-10 in Table 1, it is found that as the mass fraction of the copolymer solution increases, the expansion rate of the negative electrode plate showed a tendency of decreasing firstly and then increasing. In Example 7, the concentration of the copolymer solution is low, then the coating layer is not complete enough for the silicon-based material, and it is easy for the silicon-based material to be in direct contact with the electrolyte during battery cycling, repeatedly generating a new solid electrolyte interface layer. In Example 10, if the concentration of the copolymer solution is high, the coating uniformity of the coating layer is poor, and it is easy to have structural weak points, which affects the inhibition effect on the volume expansion of the silicon-based material. Therefore, a mass fraction of 5-20% of the copolymer solution may further enhance the inhibition effect on the volume expansion of the silicon-based material.

## Claims

1. A composite silicon-based negative electrode material, comprising a silicon-based material and a coating layer coated on a surface of the silicon-based material, wherein the coating layer comprises a copolymer comprising phosphonic acid groups and cyano groups, and a molecular weight of the copolymer is 5,000 to 100,000 g/mol (5,000 to 100,000 daltons).

2. The composite silicon-based negative electrode material according to claim 1, wherein a mole ratio of the phosphonic acid groups and the cyano groups in the copolymer is 1: (4-28).

3. The composite silicon-based negative electrode material according to claim 2, wherein the copolymer is formed by copolymerization of phosphonic acid group monomers and cyano group monomers, the phosphonic acid group monomer contains allylphosphonic acid, and the cyano group monomer contains tetracyanoethylene.

4. The composite silicon-based negative electrode material according to claim 1, wherein there is 2-7wt% of the coating layer in the composite silicon-based negative electrode material.

5. The composite silicon-based negative electrode material according to claim 1, wherein preparation steps of the composite silicon-based negative electrode material comprise:
mixing the phosphonic acid group monomers, the cyano group monomers, a solvent, and an initiator in a certain amount, allowing an obtained mixture to react at a temperature of 50-120°C to prepare the copolymer;
mixing the copolymer with a solvent homogeneously to prepare a copolymer solution, applying the copolymer solution to a surface of the silicon-based material, and drying the copolymer solution on the surface of the silicon-based material to form the coating layer on the surface of the silicon-based material.

6. The composite silicon-based negative electrode material according to claim 5, wherein forming the coating layer comprises following specific steps: mixing the silicon-based material and the copolymer solution, and spray drying a mixing slurry obtained therefrom.

7. The composite silicon-based negative electrode material according to claim 5, wherein a mass fraction of the copolymer in the copolymer solution is 5-20%.

8. A battery, comprising a positive electrode plate, a negative electrode plate, electrolyte, and a separator, wherein the negative electrode plate contains the composite silicon-based negative electrode material as claimed in any one of claims 1-7.

9. The battery according to claim 8, wherein the negative electrode plate further contains graphite, and a mass ratio of the composite silicon-based negative electrode material to graphite is 1: (6-10).

10. The battery according to claim 8, wherein the electrolyte contains carbonate ester compounds.

## Patentansprüche

1. Verbund-Negativelektrodenmaterial auf Siliziumbasis, umfassend ein Material auf Siliziumbasis und eine Beschichtungsschicht, die auf einer Fläche des Materials auf Siliziumbasis beschichtet ist, worin die Beschichtungsschicht ein Copolymer umfasst, das Phosphonsäuregruppen und Cyanogruppen umfasst, und ein Molekulargewicht des Copolymers 5,000 bis 100,000 g/mol (5,000 bis 100,000 Dalton) ist.

2. Verbund-Negativelektrodenmaterial auf Siliziumbasis nach Anspruch 1, worin ein Molverhältnis der Phosphonsäuregruppen und der Cyanogruppen im Copolymer 1: (4-28) ist.

3. Verbund-Negativelektrodenmaterial auf Siliziumbasis nach Anspruch 2, worin das Copolymer durch Copolymerisation von Phosphonsäuregruppenmonomeren und Cyanogruppenmonomeren gebildet ist, das Phosphonsäuregruppenmonomer Allylphosphonsäure enthält, und das Cyanogruppenmonomer Tetracyanoethylen enthält.

4. Verbund-Negativelektrodenmaterial auf Siliziumbasis nach Anspruch 1, worin es 2-7 Gewichts-% der Beschichtungsschicht im Verbund-Negativelektrodenmaterial auf Siliziumbasis gibt.

5. Verbund-Negativelektrodenmaterial auf Siliziumbasis nach Anspruch 1, worin Herstellungsschritte des Verbund-Negativelektrodenmaterials auf Siliziumbasis umfassen:
Mischen der Phosphonsäuregruppenmonomere, der Cyanogruppenmonomere, eines Lösungsmittels und eines Initiators in einer gewissen Menge, Ermöglichen, dass eine erhaltene Mischung bei einer Temperatur von 50-120°C reagiert, um das Copolymer herzustellen;
gleichmäßiges Mischen des Copolymers mit einem Lösungsmittel, um eine Copolymerlösung herzustellen, Aufbringen der Copolymerlösung auf einer Fläche des Materials auf Siliziumbasis, und Trocknen der Copolymerlösung auf der Fläche des Materials auf Siliziumbasis, um die Beschichtungsschicht auf der Fläche des Materials auf Siliziumbasis zu bilden.

6. Verbund-Negativelektrodenmaterial auf Siliziumbasis nach Anspruch 5, worin das Bilden der Beschichtungsschicht die folgenden spezifischen Schritte umfasst: Mischen des Materials auf Siliziumbasis und der Copolymerlösung, und Sprühtrocknen eines Misch-Slurrys, das daraus erhalten wird.

7. Verbund-Negativelektrodenmaterial auf Siliziumbasis nach Anspruch 5, worin ein Massenanteil des Copolymers in der Copolymerlösung 5-20% ist.

8. Batterie, umfassend eine Positivelektrodenplatte, eine Negativelektrodenplatte, ein Elektrolyt und einen Separator, worin die Negativelektrodenplatte das Verbund-Negativelektrodenmaterial auf Siliziumbasis nach einem der Ansprüche 1-7 enthält.

9. Batterie nach Anspruch 8, worin die Negativelektrodenplatte ferner Graphit enthält, und ein Massenverhältnis des Verbund-Negativelektrodenmaterials auf Siliziumbasis zu Graphit 1: (6-10) ist.

10. Batterie nach Anspruch 8, worin das Elektrolyt Carbonatesterverbindungen enthält.

## Revendications

1. Matériau d'électrode négative composite à base de silicium, comprenant un matériau à base de silicium et une couche de revêtement recouvrant une surface du matériau à base de silicium, dans lequel la couche de revêtement comprend un copolymère comprenant des groupes acide phosphonique et des groupes cyano, et une masse moléculaire du copolymère est de 5,000 à 100,000 g/mol (5,000 à 100,000 daltons).

2. Matériau d'électrode négative composite à base de silicium selon la revendication 1, dans lequel un rapport molaire des groupes acide phosphonique et des groupes cyano dans le copolymère est de 1: (4-28).

3. Matériau d'électrode négative composite à base de silicium selon la revendication 2, dans lequel le copolymère est formé par copolymérisation de monomères à groupe acide phosphonique et de monomères à groupe cyano, le monomère à groupe acide phosphonique contient de l'acide allylphosphonique, et le monomère à groupe cyano contient du tétracyanoéthylène.

4. Matériau d'électrode négative composite à base de silicium selon la revendication 1, dans lequel la couche de revêtement représente de 2 à 7 % en poids du matériau d'électrode négative composite à base de silicium.

5. Matériau d'électrode négative composite à base de silicium selon la revendication 1, dans lequel des étapes de préparation du matériau d'électrode négative composite à base de silicium comprennent :
mélanger les monomères à groupe acide phosphonique, les monomères à groupe cyano, un solvant et un initiateur en une certaine quantité, laisser réagir un mélange obtenu à une température de 50 à 120 °C pour préparer le copolymère ;
mélanger le copolymère avec un solvant de manière homogène pour préparer une solution de copolymère, appliquer la solution de copolymère sur une surface du matériau à base de silicium, et sécher la solution de copolymère sur la surface du matériau à base de silicium pour former la couche de revêtement sur la surface du matériau à base de silicium.

6. Matériau d'électrode négative composite à base de silicium selon la revendication 5, dans lequel la formation de la couche de revêtement comprend les étapes spécifiques suivantes : mélanger le matériau à base de silicium et la solution de copolymère, et sécher par atomisation une bouillie de mélange en résultant.

7. Matériau d'électrode négative composite à base de silicium selon la revendication 5, dans lequel une fraction massique du copolymère dans la solution de copolymère est de 5 à 20 %.

8. Batterie, comprenant une plaque d'électrode positive, une plaque d'électrode négative, un électrolyte et un séparateur, dans laquelle la plaque d'électrode négative contient le matériau d'électrode négative composite à base de silicium selon l'une quelconque des revendications 1 à 7.

9. Batterie selon la revendication 8, dans laquelle la plaque d'électrode négative contient en outre du graphite, et un rapport massique entre le matériau d'électrode négative composite à base de silicium et le graphite est de 1: (6-10).

10. Batterie selon la revendication 8, dans laquelle l'électrolyte contient des composés esters de carbonate.
